# EUROPÄISCHE PATENTSCHRIFT

(11) **EP 1 095 106 B1**
(45) Veröffentlichungstag und Bekanntmachung des Hinweises auf die Patenterteilung: **05.12.2001**
(21) Anmeldenummer: 99927907.8
(22) Anmeldetag: 08.06.1999
(51) Int. Cl.: C09C 1/36, C09D 5/08, C09D 5/44

(54) **KORROSIONSSCHUTZ-WEISSPIGMENTE UND VERFAHREN ZU DEREN HERSTELLUNG**
ANTI-CORROSIVE WHITE PIGMENTS AND METHOD FOR PRODUCING THE SAME
PIGMENTS BLANCS ANTICORROSION ET LEUR PROCEDE DE PRODUCTION

(30) Priorität: 12.06.1998 DE 19826379
(43) Veröffentlichungstag der Anmeldung: 02.05.2001
(73) Patentinhaber: Sachtleben Chemie GmbH, 47198 Duisburg (DE)
(72) Erfinder: RENTSCHLER, Thomas, D-47802 Krefeld (DE); MÜLLER, Fritz, D-47198 Duisburg (DE); WINKLER, Jochen, D-47509 Rheurdt (DE); KARL, Wolf-Rüdiger, D-47198 Duisburg (DE); FÖHR, Kirsten, D-47075 Kamp-Lintfort (DE)
(74) Vertreter: Scherzberg, Andreas, Dr.
(86) Internationale Anmeldenummer: EP9903928
(87) Internationale Veröffentlichungsnummer: WO9965994

(56) Entgegenhaltungen:
- EP-A- 0 450 805
- EP-A- 0 595 341
- DE-A- 2 255 826
- GB-A- 2 115 394
- CHEMICAL ABSTRACTS, vol. 108, no. 12, 21. März 1988 (1988-03-21) Columbus, Ohio, US; abstract no. 96259, NEDOROST, MIROSLAV ET AL: "Process for manufacture of a core anticorrosive pigment" XP002096283 & CS 235 887 B (CZECH.) 15. Mai 1985 (1985-05-15)

## Beschreibung

Die Erfindung bezieht sich auf dis Verwendung eines oberflächenbeschichteten TiO₂-Grundkörpers, vorzugsweise der Rutil-Modifikation als Korrosionsschutz-Weißpigment.

Üblicherweise werden TiO₂-Pigmente mit einer Partikelgröße von 0,4 bis 8,0 µm und einer mittleren Kornverteilung d₅₀ von 0,1 bis 1,0 µm benötigt, um dunkle Medien aufzuhellen, beziehungsweise verwendet, um Anstrichstoffen Deckvermögen zu verleihen. TiO₂-Pigmente sind dafür umso besser geeignet, je mehr die Lichtbrechung der Pigmente der Lichtbrechung des Bindemittels überlagen ist. Die Eigenschaften von Beschichtungen werden im wesentlichen durch die eingearbeiteten TiO₂-Pigmente beeinflußt. Dieses anwendungstechnische Verhalten wird bereits während der Produktion der TiO₂-Pigmente eingestellt. Das betrifft nicht nur die optischen Eigenschaften, wie Streuvermögen, Helligkeit und Glanz, sondern auch weitere Parameter, wie Wetterbeständigkeit, Dispergierbarkeit, Absetzverhalten und Benetzbarkeit.

Die zunehmende Bedeutung des Korrosionsschutzes und Erkenntnisse zu den Gesundheitsgefahren, die von bekannten blei- und chromathaltigen Korrosionsschutzpigmenten ausgehen, haben zur Entwicklung von toxikologisch unbedenklicheren Korrosionsschutzpigmenten auf der Basis von Phosphaten, insbesondere Zn₃(PO₄)₂ sowie Molybdat-, Wolframat- und Zirkonatpigmenten, metallischem Zink, organischen Pigmenten und reinen Barrierepigmenten, wie Eisenglimmer, geführt. Bekannt sind auch Korrosionsschutzpigmente aus Kombinationen von Phosphaten mit Boraten oder Silikaten (Ruf, J.: Organischer Metallschutz, Vincentz Verlag, Hannover 1993, insbesondere S. 248 bis 289).

Aus der DE-A-2 951 805 sind TiO₂-Pigmente der Rutil-Modifikation bekannt, deren Oberfläche zum Zwecke verbesserter optischer Eigenschafaten mit einer ersten Schicht aus Cer- und Phosphatresten und einer zweiten Schicht aus Aluminium- und Phosphatresten überzogen ist. In der GB-B-2 115 394 sind TiO₂-Pigmente beschrieben, die zur Verbesserung der Lichtstabilität und zur Eignung für den Einsatz in Laminaten oberflächenbeschichtet sind. Gegenstand der EP-B-0 412 686 sind TiO₂-Pigmente mit korrosionsinhibierender Wirkung, deren Partikel mit einer äußeren Schicht aus hydratisiertem Siliciumdioxid, hydratisiertem Aluminiumoxid oder einem Gemisch aus diesen beider Komponenten umhüllt sind. An die Beschichtung sind durch Ionenaustausch Korrosionsschutz bewirkende Kationen chemisch gebunden, die aus Ca-, Zn-, Li-, Ba-, Mg-, Sr-, Co- oder Pb-Ionen bestehen. In der EP-A-0 595 341 wird auf einen Anstrichstoff hingewiesen, der TiO₂-Pigmente enthält, die mit 1 bis 10 Gew.-% einer Zinklegierung überzogen sind und dem Korrosionsschutz dienen. Die DE-C-2 200 654 befaßt sich u. a. mit TiO₂-Pigmenten mit auf deren Partikeloberfläche abgeschiedenem Molybdat, die als korrosionsinhibierender Zusatz in Anstrichmitteln eingesetzt werden. Gemäß der US-A-4 017 315 kann ein solcher Überzug zusätzlich noch Metallphosphat enthalten. In der GB-A-1 044 350 sind TiO₂-Pigmente dargestellt, die mit Blei-, Strontium- oder Bariumchromat oder benzeosaurem Blei oder Calcium-Plumbat überzogen sind und als korrosionsinhibierender Zusatz in Anstrichstoffen dienen. Zusätzlich kann auch ein Überzug aus einem oder mehreren Metalloxiden und/oder einem Phosphat aufgebracht sein. Die CZ-B-235 851 schlägt u. a. TiO₂-Pigmente vor, die mit einer Schicht aus Mn₃(PO₄)₂ überzogen sind und Lacken zum Zwecke des Korrosionsschutzes zugemischt werden. CZ-B-235 887 offenbart einen TiO₂-Grundkörper, der 1. mit Zn-phosphat, 2. mit Ca- und/oder Mg-phosphat und 3. mit Mn und/oder Al-phosphat beschichtet ist und zu Korrosionsschutzzwecken eingesetzt wird.

Die heute in der Praxis als Weißpigmente und Füllstoffe in Lacken und Farben üblicherweise verwendeten TiO₂-Pigmente besitzen infolge ihrer Korngröße d₅₀ von 0,1 bis 1,0 µm in dem eingearbeiteten Medium ausgezeichnete optische Eigenschaften, die vor allem durch Lichtstreuung geprägt sind.

Es ist die Aufgabe der vorliegenden Erfindung, Korrosionsschutz-Weißpigmente auf der Basis von TiO₂ bereitzustellen, die neben ihrer hohen optischen Leistung korrosionsinhibierende Wirkung besitzen.

Die Lösung dieser Aufgabe erfolgt durch die Verwendung eines oberflächenbeschichteten TiO₂-Grundkörpers als Korrosionsschutz-Weißpigment mit den im Anspruch 1 aufgeführten Merkmalen.

Die Ansprüche 2 bis 15 geben vorzugsweise Ausgestaltungen der Verwendung gemäß Anspruch 1 wieder.

Die Herstellung der erfindungsgemäßen Korrosionsschutz-Weißpigmente ist nachfolgend näher und beispielhaft erläutert.

Eine wäßrige TiO₂-Suspension von 12 1, enthaltend 300 g TiO₂/l mit einer mittleren Partikelgröße d₅₀ von 0,35 µm, wird unter ständigem Rühren auf eine Temperatur von 80°C erhitzt. Der pH-Wert wird während der Nachbehandlung je nach Bedarf mittels NaOH, beziehungsweise H₂SO₄, eingestellt und konstant gehalten. Die einzelnen Komponenten werden in einer mehrstufigen Fällung stöchiometrisch unter ständigem Rühren und Halten des pH-Wertes und der Temperatur auf die Oberfläche der TiO₂-Grundkörper aufgefällt. Nach einer Reifezeit von 2 Stunden unter ständigem Rühren wird das entstandene Produkt jeweils abfiltriert, mit demineralisiertem Wasser gewaschen, getrocknet und anschließend strahlgemahlen.

Mittels dieser Verfahrensmaßnahmen wurden folgende, erfindungsgemäß aufgebauten Korrosionsschutz-Weißpigmente hergestellt:
1.TiO₂ -Grundkörper umhüllt mit einer Schicht aus Ce/Mn/Al/PO₄,
2.TiO₂-Grundkörper umhüllt mit einer Schicht aus Mn/Al/PO₄,
3.TiO₂-Grundkörper umhüllt mit einer Schicht aus Ce/Zn/Al/PO₄,
4.TiO₂-Grundkörper umhüllt mit einer Schicht aus Ce/Zn/Al/PO₄ (Ce- und Zn-Komponenten simultan bei der Herstellung zugegeben),
5.TiO₂-Grundkörper umhüllt mit einer Schicht aus Ce/Zn/Mn/Al/PO₄,
6.TiO₂-Grundkörper umhüllt mit einer Schicht aus Ce/Al/PO₄.

Diese Korrosionsschutz-Weißpigmente wurden zu jeweils 10 % bzw. 15 % PVK (Pigmentvolumenkonzentration: Verhältnis des Gesamtvolumens der Pigmente in einem Produkt zum Gesamtvolumen der nichtflüchtigen Anteile) sowohl in ein Alkydharz-Bindemittelsystem auf Wasserbasis (Handelsname: Worleesol 61 A) als auch in ein Alkydharz-Bindemittelsystem auf Basis organischer Lösungsmittel (Handelsname: Alftalat AM 380) eingearbeitet, indem die Komponenten mit einem Dissolver vermischt, vordispergiert, der Mahlansatz über eine Perlmühle dispergiert und auf entfettete Stahlbleche von 100 x 150 x 1 mm Größe aufgetragen und getrocknet wurde. Die Dicke der Trockenschicht betrug 35 bis 40 µm. Zu Vergleichszwecken wurden entfettete Stahlbleche gleicher Größenabmessung jeweils mit Alkydharz-Bindemittelsystem auf Wasserbasis als auch auf Basis organischer Lösungsmittel, enthaltend 10 bzw. 15 % herkömmlicher Korrosionsschutz-Weißpigmente, bestehend aus Zn₃(PO₄)₂, Lithopone, Zinkweiß und TiO₂ beschichtet und getrocknet.

Je zwei Probeplatten wurden mit einem Ritzstichel nach van Laar mit einer geraden Ritzspur parallel zur Längsseite der Probeplatten versehen, welche durch die Beschichtung bis zum metallischen Untergrund hindurchging. Die auf diese Weise behandelten Probeplatten und je zwei ungeritzte Probeplatten wurden der Salzsprühnebelprüfung mit einer
5,5 %-igen HaCl-Lösung nach DIN 51167 unterworfen. Die Probeplattan wurden unter einem Winkel von 60 bis 75° zur Waagerechten geneigt aufgestellt und die zu prüfende Seite der Besprühung zugewandt. Die Prüfungstemperatur betrug 35 ± 2°C. Die Dauer der Prüfung wurde für die mit Alkydharz-Bindemittelsystem auf Basis organischer Lösungsmittel beschichteten Probeplatten auf 400 Stunden und für die mit Alkydharz-Bindemittelsystem auf Wasserbasis beschichteten Probeplatten auf 1000 Stunden festgelegt, da nach Überschreiten dieser Zeit die quantitative Auswertung der Probeplatten hinsichtlich Unterrostung und Unterwanderung zu nicht aussagekräftigen Meßergehnissen bzw. Differenzierungen führte. Die Referenz-Probeplatte, die mit Alkydharz-Bindemittelsystem auf Wasserbasis beschichtet war, wurde bereits nach 500 Stunden dem Prüfgerät entnommen, da diese praktisch völlig zerstört war. An je zwei ungeritzten Probeplatten wurden Blasen- und Rostgrad visuell beurteilt.

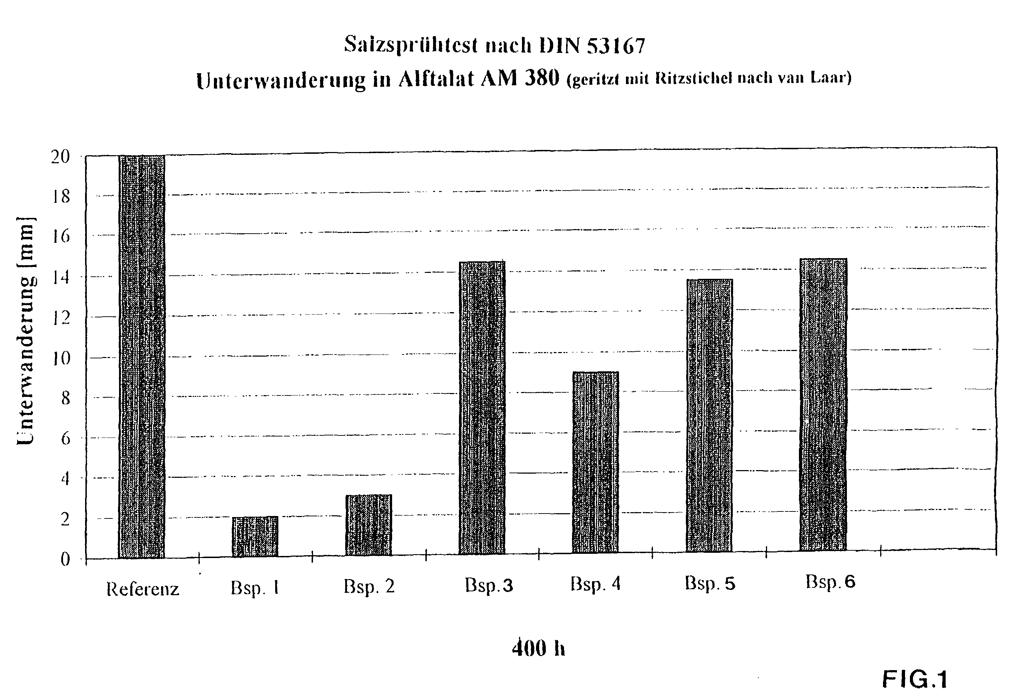

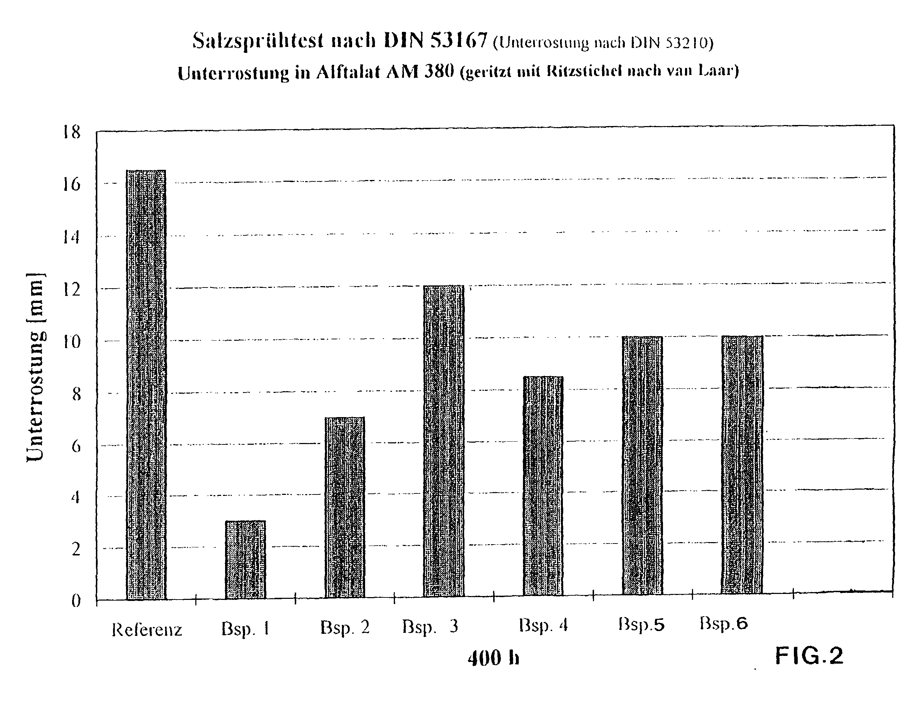

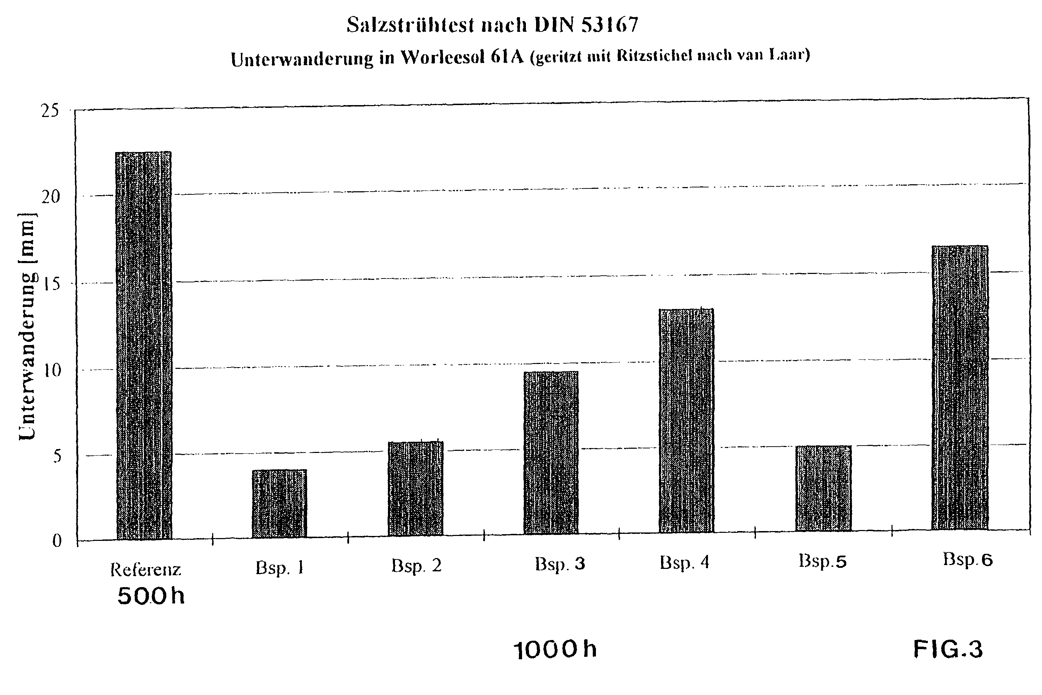

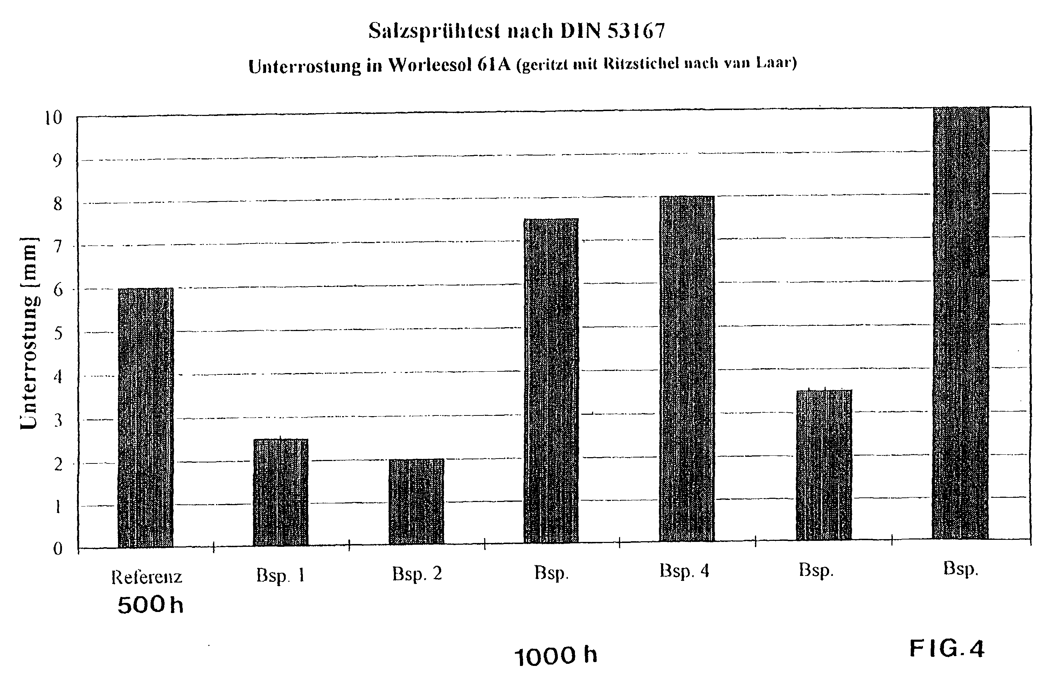

Nach der Entnahme aus dem Prüfgerät wurden die Probeplatten mit Wasser abgespült. Zur Auswertung wurde die durchschnittliche Gesamtbreite der Unterwanderungszone und der Unterrostungszone in mm bestimmt, von der die Breite der ursprünglichen Ritzspur abgezogen wurde. Die Meßergebnisse sind in Form von Säulendiagrammen in Fig. 1 bis Fig. 4 für die vorstehend angeführten Ausführungsbeispiele 1 bis 6 dargestellt. Ein Vergleich der an den mit Alkydharz-Bindemittelsystem auf Basis organischer Lösungsmittel beschichteten Probeplatten ermittelten Meßergebnisse mit denjenigen, die an den mit Alkydharz-Bindemittelsystem auf Wasserbasis beschichteten Probeplatten registriert wurden, zeigt, daß hinsichtlich des Verhaltens der Beschichtungen bei Einwirkung versprühter Natriumchlorid-Lösung das Maß der Unterwanderung und Unterrostung der Beschichtung der Schutzgrundierung auf Wasserbasis deutlich geringer ist als dasjenige bei der Schutzgrundierung auf Basis organischer Lösungsmittel. Hierdurch kann zukünftigen umweltrelevanten Forderungen Rechnung getragen werden.

Darüber hinaus zeigen Fig. 1 und Fig. 2, daß die kleinste Unterwanderung und Unterrostung der Beschichtung der Schutzgrundierung auf Basis organischer Lösungsmittel unter Verwendung der Korrosionsschutz-Weißpigmente der Typen TiO₂ mit Ce/Mn/Al/PO₄ und TiO₂ mit Mn/Al/PO₄ erreicht wird. Eine ähnlich gute Wirkung wird auch mit Beschichtungen aus der Schutzgrundierung auf Wasserbasis erreicht, wie Fig. 3 und Fig. 4 erkennen lassen. Dieser positive Effekt wird auch durch die Verwendung des Korrosionsschutz-Weißpigments des Typs TiO₂ mit Ce/Zn/Mn/Al/PO₄ erzielt.

Diese Ergebnisse sind insofern überraschend und unvorhersehbar, als sich Zinkphosphate seit mehreren Jahren als aktive Korrosionsschutzpigmente etabliert und bewährt haben.

Die erfindungsgemäß aufgebauten Weißpigmente besitzen neben ihrer herkömmlichen Streuvermögenswirksamkeit als effektive TiO₂-Weißpigmente eine hohe korrosionsinhibierende Wirkung und zwar einerseits in Formulierungen von kathodischen Tauchlackierungen wie z. B. in der Automobilindustrie und andererseits allgemein in Grundierungen und Beschichtungen im Bautenschutz, Marinebereich, Automobilsektor und dergleichen.

## Patentansprüche

1. Verwendung eines oberflächenbeschichteten TiO₂-Grundkörpers, vorzugsweise der Rutil-Modifikation mit einer Korngröße von 0,1 bis 1,0 µm, als Korrosionsschutz-Weißpigment, wobei auf die TiO₂-Grundkörper 1. Mn₃(PO₄)₃ und 2. Aluminiumoxide und/oder Aluminiumhydroxide aufgefällt sind.

2. Verwendung nach Anspruch 1, **dadurch gekennzeichnet, daß** Mn₃(PO₄)₂ teilweise durch Zn₃(PO₁)₂ ersetzt ist.

3. Verwendung nach Anspruch 1 oder 2, **dadurch gekennzeichnet, daß** auf die TiO₂-Grundkörper zusätzlich Phosphate und/oder Oxide des Cers, einzeln oder zu mehreren aufgefällt sind.

4. Verwendung nach einem der Ansprüche 1 bis 3, **dadurch gekennzeichnet, daß** die Anteile der Substanzen, gewichtsbezogen auf den TiO₂-Gehalt
0,1 bis 15 % Mangan
0,1 bis 15 % Zink
0,1 bis 15 % Al₂O₃
0,1 bis 5 % CeO₂
betragen.

5. Verwendung nach Anspruch 4, **dadurch gekennzeichnet, daß** die Anteile der Substanzen, gewichtsbezogen auf den TiO₂-Gehalt,
0,1 bis 3 % Mangan
0,1 bis 6 % Zink
0,1 bis 6 % Al₂O₃ und
0,1 bis 2,5 % CeO₂
betragen.

6. Verwendung nach einem der Ansprüche 1 bis 5, **dadurch gekennzeichnet, daß** die Auffällung aus einer wässrigen Lösung erfolgt, in der lösliche, anorganische und/oder organische Metallverbindungen des Aluminiums, des Mangans und gegebenenfalls des Zinks und/oder des Cers und/oder Phosphorverbindungen enthalten sind.

7. Verwendung nach einem der Ansprüche 1 bis 6, **dadurch gekennzeichnet, daß** die Auffällung der Aluminiumoxide und/oder Aluminiumhydroxide aus einer wässrigen Lösung erfolgt, in der als Aluminiumverbindungen Alkalialuminate, Aluminiumsulfate, -hydroxide und -halogenide einzeln oder zu mehreren eingesetzt werden.

8. Verwendung nach einem der Ansprüche 1 bis 7, **dadurch gekennzeichnet, daß** die Phosphorsäure ganz oder teilweise durch einzelne oder mehrere der Phosphatkomponenten Phosphorpentoxid, Alkaliphosphat, Alkalihydrogenphosphat, Dihydrogenphosphat, Pyrophosphat, Triphosphat und Polyphosphat ersetzbar ist.

9. Verwendung nach einem der Ansprüche 1 bis 8, **dadurch gekennzeichnet, daß** die Auffällung der Oberflächenbeschichtung kontinuierlich oder diskontinuierlich durchgeführt wird.

10. Verwendung nach einem der Ansprüche 1 bis 9, dadurch gakennzeichnet, daß die Auffällung in mehreren Stufen hintereinander oder durch simultane Zugabe mehrerer Komponenten erfolgt.

11. Verwendung nach einem der Ansprüche 1 bis 10, **dadurch gekennzeichnet, daß** die Auffällung der Aluminiumverbindungen zum Schluß erfolgt.

12. Verwendung der nach einem der Ansprüche 1 bis 11, **dadurch gekennzeichnet, daß** die Korrosionsschutz-Weißpigmente strahlgemahlen werden.

13. Verwendung nach einem der Ansprüche 1 bis 12, **dadurch gekennzeichnet, daß** die Korrosionsschutz-Weißpigmente einer thermischen Behandlung bei Temperaturen von 400 bis 1000°C unterzogen werden.

14. Verwendung der nach den Ansprüchen 1 bis 13 hergestellten Korrosionsschutz-Weißpigmente für Beschichtungen, insbesondere für Elektrophoreselacke zur kathodischen oder anodischen Tauchlackierung.

15. Verwendung der nach den Ansprüchen 1 bis 13 hergestellten Korrosionsschutz-Weißpigmente für Grundierungen, Basislackierungen, Decklackierungen und dergleichen auf Basis von wäßrigen oder organischen Lösungsmitteln aufweisenden Bindemittelsystemen, z. B. im Automobilbau, im Wasserfahrzeugbau und für den Bautenschutz.

## Claims

1. Use of a surface-coated TiO₂ base body, preferably in the rutile modification having a grain size of 0.1 to 1.0 *µ*m, as an anticorrosive white pigment, wherein firstly Mn₃(PO₄)₂ and secondly aluminium oxides and/or aluminium hydroxides are precipitated on to the TiO₂ base bodies.

2. Use according to claim 1, **characterised in that** Mn₃(PO₄)₂ is partially replaced by Zn₃(PO₄)₂.

3. Use according to claim 1 or 2, **characterised in that** phosphates and/or oxides of cerium are deposited singly, or several of them are deposited, on to the TiO₂ base bodies.

4. Use according to one of claims 1 to 3, **characterised in that** the proportions of the substances, by weight related to the TiO₂ content, amount to:
0.1 to 15% manganese
0.1 to 15% zinc
0.1 to 15% Al₂O₃
0.1 to 5% CeO₂.

5. Use according to claim 4, **characterised in that** the proportions of the substances, by weight related to the TiO₂ content, amount to:
0.1 to 3% manganese
0.1 to 6% zinc
0.1 to 6% Al₂O₃, and
0.1 to 2.5% CeO₂.

6. Use according to one of claims 1 to 5, **characterised in that** the precipitation takes place from an aqueous solution in which soluble, inorganic and/or organic metal compounds of aluminium, of manganese and possibly of zinc and/or of cerium and/or phosphorous compounds are contained.

7. Use according to one of claims 1 to 6, **characterised in that**. the precipitation of the aluminium oxides and/or aluminium hydroxides takes place from an aqueous solution in which alkali aluminates, aluminium sulphates, aluminium hydroxides and aluminium halides are used singly, or several of them are used, as aluminium compounds.

8. Use according to one of claims 1 to 7, **characterised in that** the phosphoric acid can be replaced completely or partially by one or more of the phosphate components phosphorus pentoxide, alkali phosphate, alkali hydrogen phosphate, dihydrogen phosphate, pyrophosphate, triphosphate and polyphosphate.

9. Use according to one of claims 1 to 8, **characterised in that** the precipitation of the surface coating is carried out continuously or discontinuously.

10. Use according to one of claims 1 to 9, **characterised in that** the precipitation takes place in a plurality of stages one after the other or by simultaneous addition of a plurality of components.

11. Use according to one of claims 1 to 10, **characterised in that** the precipitation of the aluminium compounds takes place at the end.

12. Use according to one of claims 1 to 11, **characterised in that** the anticorrosive white pigments are ground in a jet mill.

13. Use according to one of claims 1 to 12, **characterised in that** the anticorrosive white pigments are subjected to a thermal processing at temperatures of 400 to 1000°C.

14. Use of the anticorrosive white pigments produced according to claims 1 to 13 for coatings, in particular for electrophoresis varnishes for cathodic or anodic dip varnishing.

15. Use of the anticorrosive white pigments produced according to claims 1 to 13 for primers, base varnishes, covering varnishes and suchlike based on aqueous binding-agent systems or binding-agent systems having organic solvents, for example in the automobile industry, in watercraft construction and for the protection of buildings.

## Revendications

1. Utilisation de corps de base enrobés en TiO₂, de préférence des particules de rutile ayant une taille comprise entre 0,1 et 1,0 µm, en tant que pigment blanc anti-corrosion, les corps de base en TiO₂ ayant été enrobés par précipitation, premièrement avec du Mn₃(PO₄)₂ et, deuxièmement, avec des oxydes d'aluminium et/ou hydroxydes d'aluminium.

2. Utilisation selon la revendication 1, **caractérisée par le fait que** le Mn₃(PO₄)₂ est partiellement remplacé par du Zn₃(PO₄)₂.

3. Utilisation selon la revendication 1 ou 2, **caractérisée par le fait que** l'on applique en outre sur les corps de base en TiO₂ un ou plusieurs phosphates et/ou oxydes de cérium.

4. Utilisation selon l'une des revendications 1 à 3, **caractérisée par le fait que** les proportions des substances, exprimées en % en poids rapporté à la teneur en TiO₂, sont les suivantes :
de 0,1 à 15 % de manganèse,
de 0,1 à 15 % de zinc,
de 0,1 à 15 % de Al₂O₃,
de 0,1 à 5 % de CeO₂.

5. Utilisation selon la revendication 4, **caractérisée par le fait que** les proportions des substances, exprimées en % en poids rapporté à la teneur en TiO₂, sont les suivantes :
de 0,1 à 3 % de manganèse,
de 0,1 à 6 % de zinc,
de 0,1 à 6 % de Al₂O₃,
de 0,1 à 2,5 % de CeO₂.

6. Utilisation selon une des revendications 1 à 5, **caractérisée par le fait que** le dépôt par précipitation se fait à partir d'une solution aqueuse contenant des composés solubles, organiques et/ou minéraux, d'aluminium, de manganèse et éventuellement de zinc et/ou de cérium et/ou de phosphore.

7. Utilisation selon une des revendications 1 à 6, **caractérisée par le fait que** le dépôt par précipitation des oxydes d'aluminium et/ou hydroxydes d'aluminium se fait à partir d'une solution aqueuse contenant, en tant que composés d'aluminium, des aluminates de métaux alcalins, des sulfates d'aluminium, des hydroxydes d'aluminium et des halogénures d'aluminium, seuls ou en association les uns avec les autres.

8. Utilisation selon une des revendications 1 à 7, **caractérisée par le fait que** l'acide phosphorique est remplacé partiellement ou totalement par un ou plusieurs des composants phosphate suivants : pentoxyde de phosphore, phosphate de métal alcalin, hydrogénophosphate de métal alcalin, dihydrogénophosphate, pyrophosphate, triphosphate et polyphosphate.

9. Utilisation selon une des revendications 1 à 8, **caractérisée par le fait que** le dépôt par précipitation du revêtement de surface se fait selon un mode continu ou discontinu.

10. Utilisation selon une des revendications 1 à 9, **caractérisée par le fait que** le dépôt par précipitation se fait en plusieurs étapes successives ou par addition simultanée de plusieurs composants.

11. Utilisation selon une des revendications 1 à 10, **caractérisée par le fait que** le dépôt par précipitation des composés d'aluminium se fait en dernier.

12. Utilisation selon une des revendications 1 à 11, **caractérisée par le fait que** les pigments blancs anti-corrosion sont broyés par jet.

13. Utilisation selon une des revendications 1 à 12, **caractérisée par le fait que** l'on soumet les pigments blancs anti-corrosion à un traitement thermique à des températures allant de 400 à 1000 °C.

14. Utilisation des pigments blancs anti-corrosion préparés conformément aux revendications 1 à 13, pour des revêtements, en particuliers pour des vernis électrophorétiques destinés au vernissage par immersion cathodique ou anodique.

15. Utilisation des pigments blancs anti-corrosion préparés conformément aux revendications 1 à 13 pour des primaires, des vernis de base, des vernis couvrants et des revêtements similaires, à base de systèmes de liants contenant des solvants aqueux ou organiques, par exemple dans la construction automobile, dans la construction de véhicules nautiques ou dans la protection de bâtiments.
